# EUROPÄISCHE PATENTSCHRIFT

(11) **EP 3 939 868 B1**
(45) Veröffentlichungstag und Bekanntmachung des Hinweises auf die Patenterteilung: **05.04.2023**
(21) Anmeldenummer: 21178574.6
(22) Anmeldetag: 09.06.2021
(51) Int. Cl.: B62D 65/06, B23P 19/04, B60J 10/00

(54) **VORRICHTUNG ZUM APPLIZIEREN EINES GUMMIPROFILS**
DEVICE FOR APPLYING A RUBBER PROFILE
DISPOSITIF D'APPLICATION D'UN PROFILÉ EN CAOUTCHOUC

(30) Priorität: 17.07.2020 DE 102020118940
(43) Veröffentlichungstag der Anmeldung: 19.01.2022
(73) Patentinhaber: AyTec Automation GmbH, 93098 Mintraching (DE)
(72) Erfinder: Ruhland, Christian, 93161 Sinzing (DE)
(74) Vertreter: Glück Kritzenberger Patentanwälte PartGmbB

(56) Entgegenhaltungen:
- EP-A1- 1 813 562
- EP-A2- 2 067 645
- WO-A1-2016/041548
- DE-A1-102006 056 276
- DE-A1-102014 112 185
- GB-A- 1 588 213

## Beschreibung

Die Erfindung betrifft eine Vorrichtung zum Applizieren eines Gummiprofils auf eine Dichtfläche, insbesondere eines Kfz-Teils, wie z.B. einer Tür oder eines Kfz-Chassis gemäß dem Oberbegriff des Anspruchs 1. Derartige Vorrichtungen werden insbesondere im Automobilbau benötigt, wo Gummidichtungen aufTüreinfassungen oder Kofferraumeinfassungen eines Kraftfahrzeugchassis aufgebracht werden müssen. Derartige Vorrichtungen enthalten eine Handhabungsvorrichtung, in der Regel einen Roboter, der üblicherweise wenigstens einen Roboterarm umfasst, der mit mehreren Freiheitsgraden bewegbar ist und daher in der Lage ist, das Gummiprofil exakt an der aufzubringenden Stelle der Türeinfassung oder Kofferraumeinfassung mittels eines Führungskopfes entlang zu führen. Des Weiteren hat der Führungskopf wenigstens ein Führungselement, welches das Gummiprofil an einer definierten Stellung relativ zum Träger zuführt. Ein derartiges Führungselement ist häufig durch einen Führungskopf mit üblicherweise mehreren Führungsrollen gebildet.

Die EP 3 194 254 A1, die die Merkmale des Oberbegriffs des Anspruchs 1 offenbart, zeigt eine Vorrichtung, bei der das Gummiprofil mit einem konstanten Drehmoment vorgeschoben und somit mit einer leichten Stauchung auf die Fläche überführt wird. Auf diese Weise wird das Gummiprofil beim Aufkleben auf den Träger ein wenig gestaucht, so dass es sich aufgrund interner Spannung im Gummiprofil nicht von dem Träger ablösen kann. Es kann jedoch insbesondere bei nicht linearen Verläufen des Gummiprofils auf der Fläche vereinzelt zu Formveränderungen des Gummiprofils kommen.

Es ist Aufgabe der vorliegenden Erfindung, eine Vorrichtung zum Applizieren eines Gummiprofils auf einen Träger zu schaffen, die auf einfache Weise eine zuverlässige Verklebung des Gummiprofils auf im Träger ermöglicht unter Vermeidung von Spannungen und Verformungen im Gummiprofil.

Die Aufgabe wird durch eine Vorrichtung mit den Merkmalen des Anspruches 1 gelöst. Vorteilhafte Weiterbildungen sind Gegenstand der Unteransprüche.

Die Vorrichtung zum Applizieren eines Gummiprofils auf eine Fläche gemäß der vorliegenden Erfindung enthält eine Handhabungsvorrichtung, in der Regel einen Roboter, welche einen Roboterarm zur Bewegung und Führung eines Führungskopfes in einer Applikationsstellung aufweist, um das Gummiprofil entlang einer definierten Kontur auf der Fläche aufzubringen. In Verbindung mit dem Führungskopf ist eine Vorschubvorrichtung angeordnet, um das Gummiprofil der Fläche mit einer definierten Geschwindigkeit zuzuführen. Der Führungskopf weist wenigstens ein Führungselement zur Führung des Gummiprofils auf. Die Vorschubvorrichtung hat wenigstens eine angetriebene Treibrolle mit einer an ihrem Umfang ausgebildeten profilierten Umfangsfläche und ein Gegenelement, wobei zwischen der Treibrolle und dem Gegenelement ein Durchgang für das Gummiprofil ausgebildet ist. Die profilierte Umfangsfläche weist Spikes auf, die während des Vortriebs in das Material des Gummiprofils hineinstechen und damit für einen Formschluss zwischen der Umfangsfläche der Treibrolle und dem Gummiprofil führen. Dies wiederum bewirkt, dass die Absolutgeschwindigkeit der Umfangsfläche exakt der Vortriebsgeschwindigkeit des Gummiprofils entspricht. Ein Schlupf zwischen der Umfangsfläche und dem Gummiprofil wird damit quasi eliminiert oder zumindest weitgehendst reduziert.

Der Durchgang ist somit derart ausgebildet, dass die Spikes mit dem Gummiprofil in Formeingriff stehen. Die Kraftübertragung von der Treibrolle auf das Gummiprofil findet somit über die Spikes der Treibrolle statt. Die Treibrolle ist mit einem Antrieb, insbesondere Elektromotor verbunden, der von einer Steuerung der Vorrichtung gesteuert ist. Die Steuerung wiederum weist Mittel auf, um die Geschwindigkeit des Führungskopfes am Punkt der Aufbringung des Gummiprofils auf die Fläche zu erfassen und die Treibrolle derart anzusteuern, dass das Gummiprofil in Abhängigkeit von dieser erfassten Geschwindigkeit vorgeschoben wird, vorzugsweise mit exakt der erfassten Geschwindigkeit. Die Vorschubgeschwindigkeit kann optional an bestimmten Bereichen der Fläche, z.B. gekrümmten Flächen oder Kurven des Gummiprofils auf der Fläche ein wenig höher eingestellt werden, als es der erfassten Geschwindigkeit entspricht. Hierdurch wird das Gummiprofil in diesen Bereichen mit einer leichten Stauchung zugeführt, so dass Ablösungen aufgrund innerer Spannungen im aufgebrachten Gummiprofil vermieden werden. Die Spikes in Kombination mit der Geschwindigkeitssteuerung der Treibrolle erlauben somit eine schlupffreie exakte Steuerung der Vortriebsgeschwindigkeit und Aufbringgeschwindigkeit des Gummiprofils und damit eine optimierte Aufbringung, die zu einer Verringerung bzw. Eliminierung von Verwerfungen oder Spannungen im aufgebrachten Profil führen.

Diese erfindungsgemäße Aufbringvorrichtung hat den Vorteil, dass das Gummiprofil durch den Durchgang zwischen dem Gegenelement, das vorzugsweise als Gleitblech ausgebildet ist, und der Umfangsfläche der strukturierten Treibrolle quasi zwangsweise mit exakt der gleichen Geschwindigkeit vorgetrieben wird, wie es der Geschwindigkeit des Führungskopfes am Aufbringungspunkt des Gummiprofils entspricht. Dies hat den Vorteil, dass das Gummiprofil weder unter Zug kommt noch gestaucht wird, was bei dem aufgebrachten Gummiprofil zu Verformungen und/oder Ablösungen führen kann. Der Auftrag ist damit immer optimal und garantiert eine kraftfreie Aufbringung und Verklebung des Gummiprofils auf der aufzubringenden Fläche, z.B. einem Kfz-Chassis im Türbereich oder im Heckklappen- oder Schiebedachbereich.

Vorzugsweise haben die Spikes eine Höhe zwischen 0,5 mm und 2 mm und einen Durchmesser zwischen 0,3 mm und 2 mm, so dass sie zwar zuverlässig in das Gummiprofil zu dessen Vortrieb hineinstechen, es aber auch nicht verletzen.

Prinzipiell können die Spikes ausgebildet sein, wie das aus dem Stand der Technik bekannt ist, z.B. wie kleine Nägel, also zylindrische Elemente mit Spitzen. Vorzugsweise sind die jedoch die Spikes kegelförmig ausgebildet, so dass sie mechanisch eine hohe Stabilität aufweisen und nicht leicht abbrechen, andererseits jedoch sicher in das Gummiprofil mit ihrer Spitze einstechen. Sie können prinzipiell jede Grundfläche wie z.B. quadratisch oder sternförmig aufweisen. Vorzugsweise haben sie jedoch eine kreisrunde Grundfläche. Die ist herstellungstechnisch am leichtesten und führt beim Gummiprofil zu den geringsten Verletzungen und schont diese somit.

Prinzipiell brauchen die Spike nur irgendwie nach außen von der Umfangsfläche abstehen, um ihre Vortriebsaufgabe zu erfüllen. Vorzug stehen die Spikes von der Umfangsfläche jedoch radial ab. Auf diese Weise ist der mechanische Eingriff der Spikes in das Gummiprofil minimiert, so dass die Gummiprofile durch die Spikes nicht verletzt werden.

Die Spikes können vorzugsweise auswechselbar auf der Umfangsfläche angeordnet sein, so dass beschädigte Spikes einzeln ausgetauscht werden können, ohne die gesamte Treibrolle auszuwechseln.

Vorzugsweise ist das Gegenelement durch ein Gleitblech gebildet. Es hat sich herausgestellt, dass ein Gleitblech am besten mit der Umfangsfläche der Treibrolle zusammenwirkt, da dieses eine definierte Gegenfläche zu der Treibrolle im Durchgang bildet. Die Friktion des Gummiprofils an dem Gleitblech ist dabei so gering, dass kein Schlupf verglichen mit der Antriebsgeschwindigkeit der Treibrolle auftritt.

In einer vorteilhaften Weiterbildung der Erfindung ist an dem Führungskopf ein nicht angetriebenes Andruckelement, insbesondere eine Andruckrolle, angeordnet. Das Andruckelement ist dazu konzipiert, in der Applikationsstellung mittels einer Federeinrichtung unter Vorspannung gegen das auf die Fläche überführte Gummiprofil anzuliegen. Auf diese Weise wird das überführte Gummiprofil noch einmal gegen die Fläche des Kfz-Teils gedrückt, wobei die Adhäsionsschicht am Gummiprofil zu einer innigen Verbindung des Gummiprofils mit der Fläche führt, ohne dass hierbei weitere Kräfte einwirken, wie das beispielsweise bei einer angetriebenen Andruckrolle der Fall wäre.

Vorzugsweise ist das Führungselement konzipiert, in der Applikationsstellung unter einem entgegen der Bewegungsrichtung des Führungskopfes orientierten spitzen Winkel relativ zur Fläche orientiert zu sein. Auf diese Weise wird das Gummiprofil lagerichtig und mit einer minimalen Überführungsbewegung auf die Fläche überführt. Auch dies verringert Verformungen des Gummiprofils beim Aufbringen.

In einer vorteilhaften Weiterbildung der Erfindung weist der Führungskopf keine angetriebene Applikationsrolle auf, um das Gummiprofil gegen die Fläche zu drücken, was eine weitere Krafteinwirkung auf das Gummiprofil beim Aufbringen und damit mögliche Deformierungen des Profils beim Aufbringen verhindert.

Vorzugsweise ist die Treibrolle unmittelbar vor dem Aufbringungsort des Gummiprofils auf dem Träger angeordnet ist, womit der Weg zwischen dem Aufbringen der Vortriebskraft und dem Aufbringungspunkt reduziert, wenn möglich sogar minimiert wird. Dies führt zu einer Minimierung von Friktionseinflüssen auf das Gummiprofil nach dem Vorschub durch die Treibrolle.

Vorzugsweise enthält der Führungskopf ein Führungselement mit einem Hohlprofil, dessen Kontur exakt der Außenkontur des Gummiprofils entspricht. Auf diese Weise kann das Gummiprofil exakt zu dem Aufbringungsort geführt werden. Der Durchgang zwischen Treibrolle und Gegenelement kann dabei im Bereich des Hohlprofils ausgebildet sein.

In einer vorteilhaften Weiterbildung der Erfindung ist das Führungselement mit der Vorschubvorrichtung zusammen in einem Gehäuse angeordnet, wodurch zum einen die gesamte Vorrichtung gegen Zugriff geschützt ist und zum anderen die Arbeitssicherheit verbessert wird.

In einer Ausführungsform der Erfindung ist das Gegenelement durch eine Gegenrolle gebildet, die in dem Durchgang gegenüber der Treibrolle angeordnet ist. Auf diese Weise erfolgt der Vortrieb ohne Friktionsverluste durch das Gegenelement. In einer alternativen Ausführungsform könnte die Gegenrolle auch durch eine weiteren Treibrolle gebildet sein, die gegenüber der Treibrolle angeordnet ist, wobei der Durchgang für wenigstens einen Teil des Gummiprofils zwischen der Treibrolle und der weiteren Treibrolle gebildet ist. Auch diese Ausführungsform stellt sicher, dass das von den Treibrollen aufgebrachte Drehmoment völlig in einen Vorschub des Gummiprofils umgesetzt wird.

Vorzugsweise ist die Treibrolle konzipiert, mit einem e-förmigen Gummiprofil zusammenzuwirken, in welchem Fall der Durchgang und das Treibrad derart angeordnet sind, dass das der nach unten regende Schenkel des e unterhalb des geschlossenen Abschnitts zwischen Gegenelement und Treibrolle angeordnet und vorgeschoben wird.

In einer vorteilhaften Weiterbildung der Erfindung weist der Führungskopf eine Abziehvorrichtung zum Entfernen eines Abdeckbands von einer Klebefläche des Gummiprofils auf, wodurch mit der Vorrichtung nicht nur die Zuführung des Gummiprofils erfolgt, sondern auch die Freisetzung der Adhäsionsfläche. Vorzugsweise ist die Abziehvorrichtung in Vorschubrichtung hinter der Treibrolle angeordnet, so dass die freigelegte Adhäsionsfläche nicht in dem Durchgang zwischen Treibrolle und Gegenelement anhaftet. Das die Adhäsionsfläche abdeckende Abdeckband wird somit vorzugsweise unmittelbar vor dem Aufbringungspunkt des Gummiprofils abgezogen.

Vorzugsweise ist die Treibrolle in dem Führungskopf unmittelbar vor dem Aufbringungsort des Gummiprofils auf dem Träger angeordnet. Dies bedeutet, dass der Weg von der Treibrolle bis zu der Stelle, wo das Gummiprofil auf dem Träger verklebt wird, nur sehr kurz ist, so dass die aufgebrachte Vorschubkraft durch die Eigenelastizität des Gummiprofils möglichst wenig beeinträchtigt wird.

In einer vorteilhaften Weiterbildung der Erfindung hat der Führungskopf, z.B. im Durchgang, ein Hohlprofil, dessen Kontur zumindest ungefähr der Außenkontur des Gummiprofils entspricht. Durch dieses Hohlprofil wird das Gummiprofil vor dem Aufbringen auf den Träger hindurchgeführt. Hierdurch wird erreicht, dass sich das Gummiprofil beim Aufbringen auf den Träger und beim Einleiten des magnetischen Drehmomentes von der Treibrolle möglichst wenig deformiert. Diese Ausführungsform der Erfindung stützt somit die konstanten Betriebsbedingung hinsichtlich des Vorschubs mit definierter Geschwindigkeit, um somit definierte und konstante Bedingungen für die Aufbringung des Gummiprofil zu schaffen, die zu einer deutlich verbesserten Adhäsion und Genauigkeit der Aufbringung der Aufbringung des Gummiprofils auf den Träger führt. Durch diese Ausführungsform lassen sich somit auch Gummiprofile in sehr exakter Weise positionieren, die z.B. in die Außenkontur eines Kraftfahrzeugs herausstehen.

Es erübrigt sich zu sagen, dass die Vorrichtung insbesondere für ein Gummiprofil mit einer selbstklebenden Fläche konzipiert ist, so dass das Gummiprofil nach dem Aufbringen auf dem Träger selbsttätig haften bleibt. Eine Klebeschicht kann jedoch alternativ mittels des Führungskopfes vor dem Aufbringen des Gummiprofils auf den Träger auf eine der beiden Komponenten aufgebracht werden.

Vorzugsweise ist der Führungskopf mit der Vorschubvorrichtung zusammen in einem Gehäuse angeordnet, so dass die effektiven Komponenten des Führungskopfes, wie z.B. der Antriebsmotor, die Treibrolle und das Gegenelement in der Arbeitsumgebung geschützt angeordnet sind. Dies verringert u.a. auch die Unfallgefahr am Arbeitsplatz, während es andererseits sicherstellt, dass die einzelnen Komponenten im Führungskopf gegen versehentliche Beschädigung durch Fremdeinwirkung geschützt werden. Die im Gehäuse angeordneten Komponenten sind so auch besser vor Verschmutzung geschützt.

In einer vorteilhaften Weiterbildung der Erfindung ist der Durchgang zwischen Treibrolle und Gegenrolle oder zwischen der Treibrolle und der weiteren Treibrolle für die Aufnahme eines massiven Teils des Gummiprofils konzipiert. Insbesondere Gummiprofile im Kfz-Bereich enthalten in der Regel ein Hohlprofil, um die nötige Elastizität bereitzustellen, die für eine sichere Abdichtung des Türbereiches oder Kofferraumbereichs notwendig ist. Ein Hohlprofil hat wiederum den Nachteil, dass es bei Krafteinleitung sehr stark nachgibt, was erschwert, eine Kraft definiert auf das Hohlprofil einzuleiten. In der Regel haben derartige Hohlprofile jedoch auch einen massiven Teil insbesondere in dem Abschnitt, in welchem das Gummiprofil auf den Träger verklebt wird. Vorzugsweise ist der Durchgang exakt für diesen massiven Teil vorgesehen, so dass das aufgebrachte Drehmoment nicht in einer Verformung des Gummiprofils umgesetzt wird, sondern tatsächlichen Vorschub.

Um die Aufbringungsbedingungen zu standardisieren, kann die Vorrichtung zum Applizieren des Gummiprofils zusätzlich eine Andruckvorrichtung zum Andrücken des applizierten Gummiprofils auf den Träger aufweisen. Diese Andruckvorrichtung kann z.B. in dem Führungskopf integriert ausgebildet oder zusätzlich an diesem angebracht sein. Sie kann Rollen umfassen, die auf einen Teil des Gummiprofils einwirken, um diese gegen den Träger zu drücken. Auf diese Weise wird eine definierte Aufbringung des Gummiprofils auf den Träger gewährleistet.

Folgende Ausdrücke werden synonym verwendet: Abdeckstreifen - Liner; Treibrolle - Treibrad; Fläche - Oberfläche - Dichtfläche; Vorrichtung - Aufbringvorrichtung; Handhabungsvorrichtung - Roboter; Antriebsmotor - Antrieb - Elektromotor;
Nachfolgend wird die Erfindung beispielsweise anhand der schematischen Zeichnung beschrieben. In dieser zeigen:
- Fig. 1: eine schematische Darstellung der Aufbringvorrichtung mit einem über einen Roboter bewegten Führungskopf zum Aufbringen eines Gummiprofils;
- Fig. 2: eine Seitenansicht einer Ausführungsform des Führungskopfes aus Fig. 1 mit einer Vorschubvorrichtung zum Aufbringen des Gummiprofils auf einen Träger;
- Fig. 3: eine perspektivische Ansicht einer Vorschubvorrichtung mit Treibrolle und Gegenelement in einem Führungskopf gemäß Fig. 1 oder 2,
- Fig. 4: einen Frontansicht der Vorschubvorrichtung aus Fig. 3, und
- Fig. 5: eine Aufsicht auf die Vorschubvorrichtung aus Fig. 3.

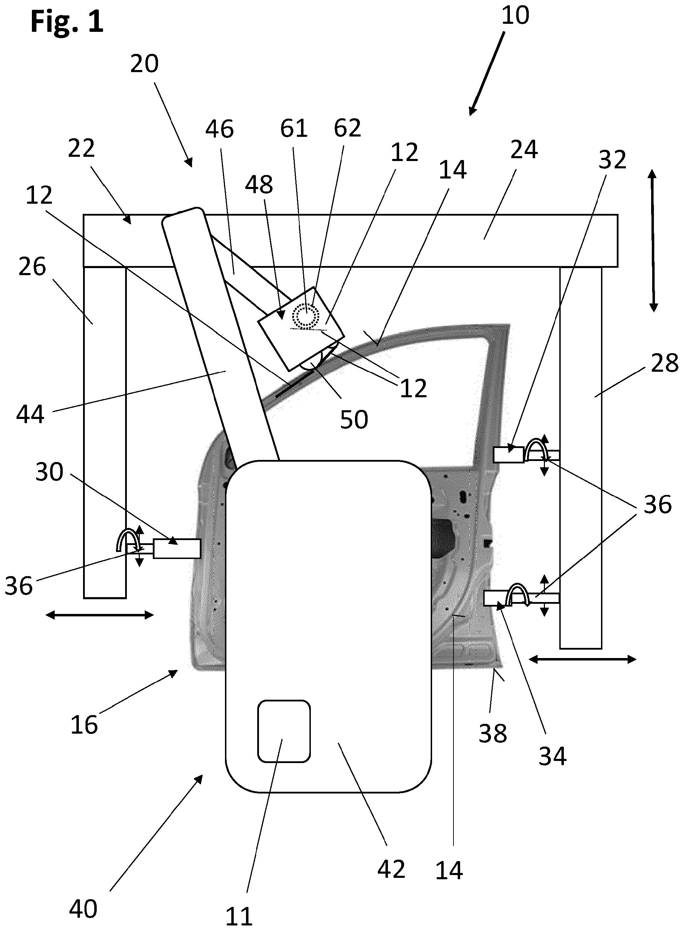

Fig. 1 zeigt eine Aufbringvorrichtung 10 zum Aufbringen eines Gummiprofils 12 auf eine Fläche, z.B. eine umlaufende Dichtfläche 14 eines Kraftfahrzeugteils 16, in diesem Beispiel einer Kraftfahrzeugtür. Die Vorrichtung 10 enthält hierfür beispielsweise eine Haltevorrichtung 20 mit einem Halterahmen 22, der aus einer Horizontalstrebe 24 besteht, an welcher zwei Vertikalstreben 26, 28 in einem zueinander verstellbaren Abstand gehalten sind. Der Halterahmen 22 kann von einer nicht dargestellten Bewegungsvorrichtung zwischen einem Kraftfahrzeugteilelager, einer Aufbringposition und einem zweiten Lager für bearbeitete Kraftfahrzeugteile bewegt werden. An der ersten Vertikalstrebe 26 ist eine erste Tragklaue 30 angeordnet und an der zweiten Vertikalstrebe 28 sind zwei weitere Tragklauen 32, 34, das heißt eine zweite Tragklaue 32 und eine dritte Tragklaue 34 angeordnet. Die vertikale Position jeder Tragklaue 30, 32, 34 an den Vertikalstreben 26, 28 ist einstellbar. Jede Tragklaue 30, 32, 34 ist über einen entsprechenden Tragarm 36 über einen zugeordneten Stellmechanismus sowohl in ihrem Abstand von der Vertikalstrebe 26, 28 als auch um ihre Längsachse rotierbar gehalten. Jede der drei Tragklauen 30, 32, 34 ist somit in ihrem Abstand von der jeweiligen Vertikalstrebe 26, 28, in ihrer vertikalen Position an der Vertikalstrebe 26, 28 als auch um ihre Längsachse rotierbar gehalten. Das Kraftfahrzeugteil 12 hat neben der umlaufenden Dichtfläche eine umlaufende Kante 38, die von den drei Tragklauen 30, 32, 34 gegriffen wird.

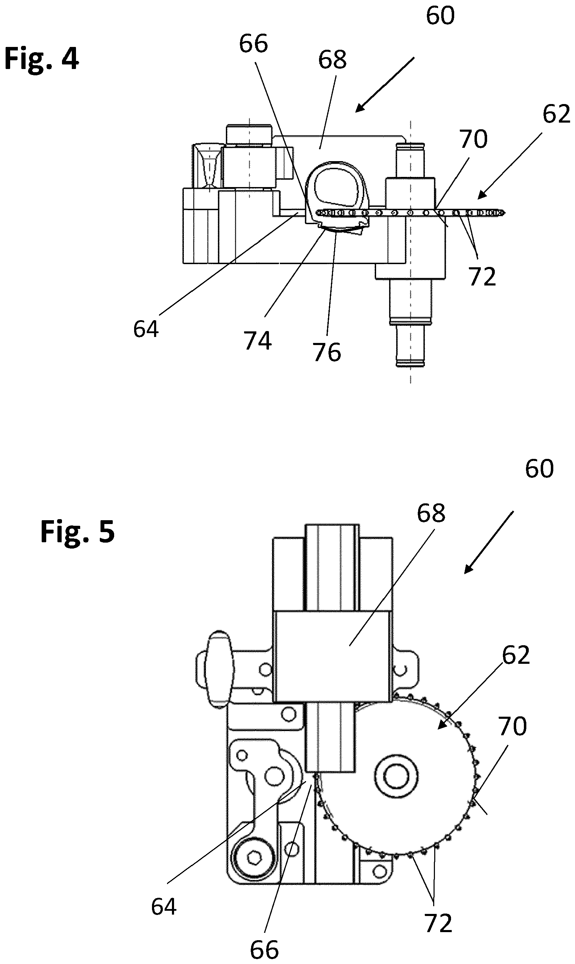

Die Aufbringvorrichtung 10 umfasst des Weiteren als Handhabungsvorrichtung einen Roboter 40, der vor dem Halterahmen 22 an der Seite der umlaufenden Dichtfläche 14 des Kraftfahrzeugteils 16 angeordnet ist. Der Roboter 40 enthält einen Basiskörper 42, an welchem schwenkbar ein erster Roboterarm 44 angeordnet ist, an dessen freiem Ende wiederum ein zweiter Roboterarm 46 schwenkbar angeordnet ist, an dessen freiem Ende ein Führungskopf 48 vorzugsweise schwenkbar und/oder ums eine Achse rotierbar gehalten ist, der in sich bekannter Weise ein Gummiprofil 12 auf die umlaufende Dichtfläche 14 des Kraftfahrzeugteils 16 aufdrückt. Das Aufbringen erfolgt in dem Führungskopf 48 oft, aber nicht notwendigerweise, über eine Andruckrolle 50. Der Führungskopf 48 enthält einen Antrieb, z.B. einen Elektromotor 61, der eine Treibrolle 62 antreibt, die mit dem Gummiprofil 12 interagiert um es vorwärts zu schieben. Das Gummiprofil 12 weist in der Regel einen Liner oder Abdeckstreifen 76 (Fig. 4) auf, der eine nach unten weisende Klebefläche 74 des Gummiprofils 12 abdeckt. Der Liner 76 wird vor dem Aufbringen abgezogen wird, so dass mit dem Aufdrücken des Gummiprofils 12 auf die Dichtfläche 14 mittels der Andruckrolle 50 das Gummiprofil 12 sicher auf der Dichtfläche 14 des Kraftfahrzeugteils 16 festgeklebt wird.

Die Aufbringvorrichtung 10 umfasst weiterhin eine z.B. im Basiskörper 42 angeordnete Steuerung 11, die den Roboter 40 und damit die Bewegung des Führungskopfes 48 entlang der Dichtfläche 14 des Kfz-Teils steuert. Diese Steuerung erfasst die Geschwindigkeit des Führungskopfes 48 relativ zur Dichtfläche 14 und ist konzipiert, die Vorschubgeschwindigkeit der nachfolgend beschriebenen Vorschubeinrichtung 60 für das Gummiprofil 12 zu steuern.

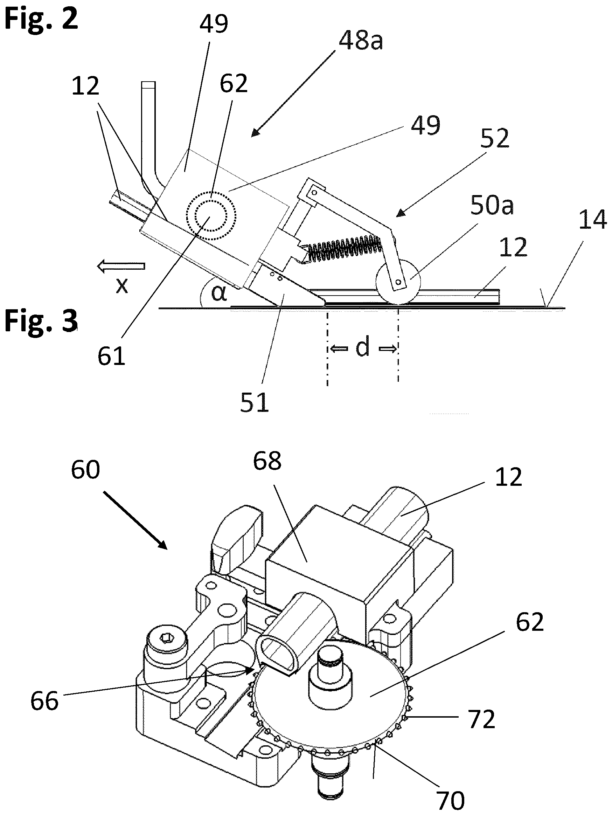

Figur 2 zeigt eine alternative Ausführungsform 48a eines Führungskopfes mit einem Gehäuse 49, in welchem eine Vorschubeinrichtung 60 (Fig. 3 bis 5) für ein Gummiprofil 12 mit einem e-förmigen Querschnitt angeordnet ist, welche den Antrieb, z.B. den Elektromotor 61 aufweist, um die Treibrolle 62 anzutreiben. Bei diesem Führungskopf 48a wird das Gummiprofil 12 nicht mittels einer Andruckrolle 50 auf die Dichtfläche 12 überführt wird, sondern allein aufgrund des Vortriebs des Gummiprofils 12 in einem ersten Führungselement 51, welches in einem spitzen Winkel a entgegen der Bewegungsrichtung x des Führungskopfes 48a relativ zur Dichtfläche 14 ausgerichtet ist. Eine nicht angetriebene Andruckrolle 50a drückt hier das Gummiprofil 12 erst in einem Abstand d nach dessen Aufbringung mittels einer Federeinrichtung 52 auf die Dichtfläche 14, um damit eine feste Adhäsion des Gummiprofils 12 mittels dessen Klebefläche auf der Dichtfläche 14 sicher zu stellen.

Die nachfolgenden Figuren 3 bis 5 zeigen unterschiedliche Ansichten einer Vorschubvorrichtung 60, wie sie in den Führungsköpfen 48, 48a der Fig. 1 und 2 verwendet werden kann. Die Vorschubeinrichtung 60 für das Gummiprofil 12 umfasst eine Treibrolle 62, die von einem Antriebsmotor 61 angetrieben ist, der in dieser Zeichnung nicht dargestellt ist. Gegenüber der Treibrolle 62 ist als Gegenelement ein Gleitblech 64 angeordnet, so dass zwischen den beiden ein Durchgang 66 für das Gummiprofil entsteht, der auf ein zweites Führungselement 68 folgt, welches einen Durchtritt für das Gummiprofil aufweist, der genau der Außenkontur des Gummiprofils 12 entspricht. Auf diese Weise wird das Gummiprofil 12 genau dem Durchgang 66 zwischen Treibrolle und dem Gleitblech 64 zugeführt. Die Treibrolle 62 hat einen Umfangsfläche 70, der mit Spikes 72 bestückt ist.

Die Treibrolle 62 ist in axialer Richtung sehr schmal ausgebildet, in Art eines dünnen Treibrads. Dadurch ist sie konzipiert, unterhalb des geschlossenen Bereichs des e-förmigen Gummiprofils einzugreifen und somit den vertikalen Abschnitt des e direkt unterhalb des geschlossenen Profilbereichs zu greifen und vorzuschieben. Dieser senkrechte Schenkel des e (bevor er in den waagrechten Teil übergeht) wird zwischen der Treibrolle 62 und dem Gleitblech 64 gegriffen und durch die Spikes 72 auf der Umfangsfläche 70 des rotierenden Treibrads 62 vorwärts getrieben, und zwar exakt mit der Geschwindigkeit des Führungskopfes 48 relativ zur Dichtfläche 14 des Kfz-Teils 16 oder etwas schneller. Optional kann an bestimmten Bereich der Fläche 14, z.B. dort, wo das Gummiprofil 12 eine Kurve durchläuft, die Geschwindigkeit so gesteuert werden, dass die Vorschubgeschwindigkeit der Vorschubvorrichtung 60 ein klein wenig größer als die erfasste Relativgeschwindigkeit zwischen Führungskopf 48 und Dichtfläche 14 ist. So wird das Gummiprofil 12 an diesen Stellen mit einer leichten Stauchung zugeführt, was eine Ablösung aufgrund interner Spannungen im aufgebrachten Gummiprofil12 entgegenwirkt.

In Fig. 4 ist das Gummiprofil 12, welches zum Applizieren auf einem Kfz-Teil, also z.B. einer Türeinfassung oder Kofferraumeinfassung eines Kraftfahrzeugchassis verwendet wird, im Profil zu sehen. Das e-förmige Gummiprofil 12 umfasst einen oberen geschlossenen Hohlprofilabschnitt und darunter einen dem unteren Teil des e entsprechenden Applizierungsabschnitt, mit einem zuerst vertikalen Abschnitt, der in einen horizontalen unteren Abschnitt des Gummiprofils übergeht. An der Unterseite dieses horizontalen Abschnitts des Gummiprofils ist die Klebefläche 74 angeordnet, die durch das Abdeckband 76 abgedeckt ist. Das Abdeckband 76 deckt die Klebefläche 74 vor dem Aufbringen auf die Oberfläche 14 des Kfz-Teils 16 ab und sorgt dafür, dass das Gummiprofil 12 nicht bereits in dem Führungskopf 48 kleben bleibt und insgesamt einfacher zu handhaben ist.

Der Führungskopf 48 enthält deshalb vorzugsweise eine nicht dargestellte Abziehvorrichtung, um das Abdeckband 76 von der Klebefläche 74 des Gummiprofils 12 abzuziehen, bevor dieses auf die Oberfläche 14 des Kfz-Teils 16 aufgebracht wird. Das Abdeckband 76 wird erst unmittelbar vor dem Aufbringen des Gummiprofils 12 auf die Dichtfläche 14 des Kraftfahrzeugteils 16abgezogen.

Die Erfindung ist nicht auf das aufgeführte Ausführungsbeispiel beschränkt, sondern kann innerhalb des Schutzbereichs der nachfolgenden Ansprüche variiert werden.

### Bezugszeichenliste:

- 10: Aufbringvorrichtung
- 11: Steuerung der Aufbringvorrichtung
- 12: Gummiprofil
- 14: Dichtfläche eines Kfz-Teil, z.B. Chassis oder Tür
- 16: Kraftfahrzeugteil
- 20: Haltevorrichtung für ein Kfz-Teil
- 22: Halterahmen
- 24: Horizontalstrebe des Halterahmens
- 26: erste Vertikalstrebe des Halterahmens
- 28: zweite Vertikalstrebe des Halterahmens
- 30: erste Tragklaue
- 32: zweite Tragklaue
- 34: dritte Tragklaue
- 36: Tragarm jeder Tragklaue
- 38: umlaufende Kante des Kfz-Teils
- 40: Roboter
- 42: Basiskörper des Roboters
- 44: erster Roboterarm
- 46: zweiter Roboterarm
- 48: Führungskopf montiert am zweiten Roboterarm
- 49: Gehäuse des Führungskopfes
- 50,50a: Andruckrolle
- 51: erstes Führungselement
- 52: Federeinrichtung zur Vorspannung der Andruckrolle gegen das aufgebrachte Gummiprofil
- 60: Vorschubvorrichtung
- 61: Antrieb - Antriebsmotor - Elektromotor
- 62: Treibrolle
- 64: Gegenelement - Gleitblech
- 66: Durchgang zwischen Treibrolle und Gegenelement
- 68: zweites Führungselement
- 70: Umfangsfläche der Treibrolle
- 72: Spikes im Umfangsbereich der Treibrolle
- 74: Klebefläche des Gummiprofils
- 76: Abdeckband (Liner) zur Abdeckung der Klebefläche bis zum Aufbringen des Gummiprofils
- a: Neigungswinkel
- x: Bewegungsrichtung
- d: Abstand zwischen Aufbringpunkt des Gummiprofils und Andruckrolle

## Patentansprüche

1. Vorrichtung (10) zum Applizieren eines Gummiprofils (12) auf eine Fläche (14) insbesondere eines Kraftfahrzeugteils, umfassend einen Roboter (40), welcher wenigstens einen Roboterarm (42, 44) zur Bewegung und Führung eines Führungskopfes (48) in einer Applikationsstellung aufweist, um das Gummiprofil (12) entlang einer definierten Kontur auf der Fläche (14) aufzubringen, wobei in Verbindung mit dem Führungskopf (48) eine Vorschubvorrichtung (60) angeordnet ist, um das Gummiprofil (12) der Fläche (14) mit einer definierten Geschwindigkeit zuzuführen, wobei der Führungskopf (48) wenigstens ein Führungselement (51, 68) zur Führung des Gummiprofils aufweist, welche Vorschubvorrichtung (60) wenigstens eine angetriebene Treibrolle (62) mit einer an ihrem Umfang ausgebildeten profilierten Umfangsfläche (70) und ein Gegenelement (64) aufweist, wobei zwischen der Treibrolle (62) und dem Gegenelement (64) ein Durchgang (66) für das Gummiprofil (12) ausgebildet ist, **dadurch gekennzeichnet, dass** auf der profilierten Umfangsfläche (70) Spikes (72) ausgebildet sind, die konzipiert sind, in das Gummiprofil (12) in zumindest teilweise einzudringen, wobei die Treibrolle (62) mit einem Antrieb (61), insbesondere Elektromotor verbunden ist, der von einer Steuerung (11) der Vorrichtung (10) gesteuert ist, welche Steuerung (11) Mittel aufweist, um die Geschwindigkeit des Führungskopfes (48) am Punkt der Aufbringung des Gummiprofils (12) auf die Fläche (14) zu erfassen und die Treibrolle (62) derart anzusteuern, dass das Gummiprofil (12) in Abhängigkeit von dieser Geschwindigkeit vorgeschoben wird.

2. Vorrichtung nach Anspruch 1, **dadurch gekennzeichnet, dass** die Spikes (72) eine Höhe zwischen 0,5 mm und 2 mm und einen Durchmesser zwischen 0,3 mm und 2 mm aufweisen.

3. Vorrichtung nach Anspruch 1 oder 2, **dadurch gekennzeichnet, dass** die Spikes (72) kegelförmig ausgebildet sind, und vorzugsweise eine kreisrunde Grundfläche aufweisen.

4. Vorrichtung nach einem der vorhergehenden Ansprüche, **dadurch gekennzeichnet, dass** die Spikes (72) von der Umfangsfläche (70) radial abstehen.

5. Vorrichtung nach einem der vorhergehenden Ansprüche, **dadurch gekennzeichnet, dass** das Gegenelement (64) durch ein Gleitblech gebildet ist.

6. Vorrichtung nach einem der vorhergehenden Ansprüche, **dadurch gekennzeichnet, dass** an dem Führungskopf (16) ein nicht angetriebenes Andruckelement (50, 50a), insbesondere eine Andruckrolle, angeordnet ist, welches Andruckelement (50, 50a) dazu konzipiert ist, in der Applikationsstellung mittels einer Federeinrichtung (52) unter Vorspannung gegen das auf die Fläche (14) überführte Gummiprofil (12) anzuliegen.

7. Vorrichtung nach einem der vorhergehenden Ansprüche, **dadurch gekennzeichnet, dass** das Führungselement (51) konzipiert ist, in der Applikationsstellung unter einem entgegen der Bewegungsrichtung (x) des Führungskopfes (48) orientierten spitzen Winkel (a) relativ zur Fläche (14) orientiert zu sein.

8. Vorrichtung nach einem der vorhergehenden Ansprüche, **dadurch gekennzeichnet, dass** der Führungskopf (48) keine angetriebene Applikationsrolle aufweist, um das Gummiprofil (12) gegen die Fläche (14) zu drücken.

9. Vorrichtung nach einem der vorhergehenden Ansprüche, **dadurch gekennzeichnet, dass** die Treibrolle (12a,b) unmittelbar vor dem Aufbringungsort des Gummiprofils (22; 40) auf dem Träger (28) angeordnet ist.

10. Vorrichtung nach einem der vorhergehenden Ansprüche, **dadurch gekennzeichnet, dass** der Führungskopf (48) ein zweites Führungselement (68) mit einem Hohlprofil enthält, dessen Kontur exakt der Außenkontur des Gummiprofils (12) entspricht.

11. Vorrichtung nach Anspruch 10, **dadurch gekennzeichnet, dass** das Führungselement (10) mit der Vorschubvorrichtung (60) in einem Gehäuse angeordnet ist.

12. Vorrichtung nach einem der vorhergehenden Ansprüche, **dadurch gekennzeichnet, dass** das Gegenelement (64) durch eine Gegenrolle gebildet ist, die gegenüber der Treibrolle (62) angeordnet ist.

13. Vorrichtung nach einem der Ansprüche 1 bis 4 und 6 bis 12, **dadurch gekennzeichnet, dass** das Gegenelement (64) durch eine zweite Antriebsrolle gebildet ist, die gegenüber der Treibrolle (62) angeordnet ist.

14. Vorrichtung nach einem der vorhergehenden Ansprüche, **dadurch gekennzeichnet, dass** der Führungskopf (48) eine Abziehvorrichtung zum Entfernen eines Abdeckbands (76) von einer Klebefläche (74) des Gummiprofils (12) aufweist.

## Claims

1. Device (10) for applying a rubber profile (12) to a surface (14), in particular of a motor vehicle part, comprising a robot (40) which has at least one robot arm (42, 44) for moving and guiding a guide head (48) in an application position in order to apply the rubber profile (12) along a defined contour to the surface (14), a feed device (60) being arranged in connection with the guide head (48) in order to feed the rubber profile (12) to the surface (14) at a defined speed, the guide head (48) having at least one guide element (51, 68) for guiding the rubber profile, which feed device (60) has at least one driven drive roller (62) with a profiled circumferential surface (70) formed on its circumference, and a counter element (64) wherein a passage (66) for the rubber profile (12) is formed between the drive roller (62) and the counter element (64), **characterized in that** spikes (72) are formed on the profiled circumferential surface (70), which spikes are designed to penetrate at least partially into the rubber profile (12), wherein the drive roller (62) is connected to a drive (61), in particular an electric motor, which is controlled by a control (11) of the device (10), which controller (11) has means for detecting the speed of the guide head (48) at the point of application of the rubber profile (12) to the surface (14) and for controlling the drive roller (62) in such a way that the rubber profile (12) is advanced as a function of this speed.

2. Device according to claim 1, **characterized in that** the spikes (72) have a height between 0.5 mm and 2 mm and a diameter between 0.3 mm and 2 mm.

3. Device according to claim 1 or 2, **characterized in that** the spikes (72) are conical in shape, and preferably have a circular base.

4. Device according to one of the preceding claims, **characterized in that** the spikes (72) project radially from the circumferential surface (70).

5. Device according to one of the preceding claims, **characterized in that** the counter element (64) is formed by a sliding plate.

6. Device according to one of the preceding claims, **characterized in that** a non-driven pressure element (50, 50a), in particular a pressure roller, is arranged on the guide head (16), which pressure element (50, 50a) is designed to lie under pretension against the rubber profile (12) transferred to the surface (14) by means of a spring device (52) in the application position.

7. Device according to one of the preceding claims, **characterized in that** the guide element (51) is designed, in the application position, to be oriented at an acute angle (a) relative to the surface (14), oriented counter to the direction of movement (x) of the guide head (48).

8. Device according to any one of the preceding claims, **characterized in that** the guide head (48) does not comprise a driven application roller for pressing the rubber profile (12) against the surface (14).

9. Device according to any one of the preceding claims, **characterized in that** the drive roller (12a,b) is arranged immediately upstream of the application location of the rubber profile (22; 40) on the carrier (28).

10. Device according to one of the preceding claims, **characterized in that** the guide head (48) contains a second guide element (68) with a hollow profile, the contour of which corresponds exactly to the outer contour of the rubber profile (12).

11. Device according to claim 10, **characterized in that** the guide element (10) is arranged in a housing with the feed device (60).

12. Device according to one of the preceding claims, **characterized in that** the counter element (64) is formed by a counter roller arranged opposite the drive roller (62).

13. Device according to one of claims 1 to 4 and 6 to 12, **characterized in that** the counter element (64) is formed by a second drive roller arranged opposite the drive roller (62).

14. Device according to one of the preceding claims, **characterized in that** the guide head (48) comprises a peeling device for removing a cover tape (76) from an adhesive surface (74) of the rubber profile (12).

## Revendications

1. Dispositif (10) pour appliquer un profilé en caoutchouc (12) sur une surface (14), en particulier d'un élément de véhicule automobile, comprenant un robot (40) qui présente au moins un bras de robot (42, 44) pour déplacer et guider une tête de guidage (48) dans une position d'application, afin d'appliquer le profilé en caoutchouc (12) le long d'un contour défini sur la surface (14), un dispositif d'avance (60) étant disposé en liaison avec la tête de guidage (48), pour amener le profilé en caoutchouc (12) à la surface (14) à une vitesse définie, la tête de guidage (48) présentant au moins un élément de guidage (51, 68) pour guider le profilé en caoutchouc, lequel dispositif d'avance (60) présente au moins un rouleau d'entraînement (62) entraîné avec une surface périphérique profilée (70) formée sur sa périphérie et un contre-élément (64), un passage (66) pour le profilé en caoutchouc (12) étant formé entre le rouleau d'entraînement (62) et le contre-élément (64), **caractérisé en ce que** des pointes (72) sont formées sur la surface périphérique profilée (70), qui sont conçues pour pénétrer au moins partiellement dans le profilé en caoutchouc (12), le rouleau d'entraînement (62) étant relié à un moyen d'entraînement (61), en particulier un moteur électrique, qui est commandé par une unité de commande (11) du dispositif (10), laquelle unité de commande (11) présente des moyens pour détecter la vitesse de la tête de guidage (48) au point d'application du profilé en caoutchouc (12) sur la surface (14) et pour actionner le rouleau d'entraînement (62) de manière à faire avancer le profilé en caoutchouc (12) en fonction de cette vitesse.

2. Dispositif selon la revendication 1, **caractérisé en ce que** les pointes (72) présentent une hauteur comprise entre 0,5 mm et 2 mm et un diamètre compris entre 0,3 mm et 2 mm.

3. Dispositif selon la revendication 1 ou 2, **caractérisé en ce que** les pointes (72) sont de forme conique et présentent de préférence une surface de base circulaire.

4. Dispositif selon l'une des revendications précédentes, **caractérisé en ce que** les pointes (72) font saillie radialement de la surface périphérique (70).

5. Dispositif selon l'une des revendications précédentes, **caractérisé en ce que** le contre-élément (64) est formé par une plaque de glissement.

6. Dispositif selon l'une des revendications précédentes, **caractérisé en ce qu'**un élément de pression (50, 50a) non entraîné, en particulier un rouleau de pression, est disposé sur la tête de guidage (16), lequel élément de pression (50, 50a) est conçu pour, dans la position d'application, s'appliquer sous précontrainte contre le profilé en caoutchouc (12) transféré sur la surface (14) au moyen d'un moyen à ressort (52).

7. Dispositif selon l'une des revendications précédentes, **caractérisé en ce que** l'élément de guidage (51) est conçu pour être orienté, dans la position d'application, selon un angle aigu (α) par rapport à la surface (14), orienté à l'encontre de la direction de déplacement (x) de la tête de guidage (48).

8. Dispositif selon l'une des revendications précédentes, **caractérisé en ce que** la tête de guidage (48) ne présente pas de rouleau d'application entraîné pour presser le profilé en caoutchouc (12) contre la surface (14).

9. Dispositif selon l'une des revendications précédentes, **caractérisé en ce que** le rouleau d'entraînement (12a, b) est disposé directement avant le lieu d'application du profilé en caoutchouc (22 ; 40) sur le support (28).

10. Dispositif selon l'une des revendications précédentes, **caractérisé en ce que** la tête de guidage (48) comporte un deuxième élément de guidage (68) avec un profil creux dont le contour correspond exactement au contour extérieur du profilé en caoutchouc (12).

11. Dispositif selon la revendication 10, **caractérisé en ce que** l'élément de guidage (10) est disposé avec le dispositif d'avance (60) dans un boîtier.

12. Dispositif selon l'une des revendications précédentes, **caractérisé en ce que** le contre-élément (64) est formé par un contre-rouleau disposé en face du rouleau d'entraînement (62).

13. Dispositif selon l'une des revendications 1 à 4 et 6 à 12, **caractérisé en ce que** le contre-élément (64) est formé par un deuxième rouleau d'entraînement qui est disposé en face du rouleau d'entraînement (62).

14. Dispositif selon l'une des revendications précédentes, **caractérisé en ce que** la tête de guidage (48) présente un dispositif d'arrachage pour retirer une bande de recouvrement (76) d'une surface adhésive (74) du profilé en caoutchouc (12).
